# FASCICULE DE BREVET EUROPEEN

(11) **EP 2 150 452 B1**
(45) Date de publication et mention de la délivrance du brevet: **03.08.2011**
(21) Numéro de dépôt: 08805582.7
(22) Date de dépôt: 16.05.2008
(51) Int. Cl.: B62D 17/00, B60G 7/00, B62D 6/00, B62D 111/00, B62D 117/00, B62D 103/00

(54) **MONTAGE DE ROUE D'UN VÉHICULE AUTOMOBILE COMPRENANT UN ACTIONNEUR BINAIRE DE RÉGLAGE DE LA POSITION ANGULAIRE DU PLAN D'UNE ROUE**
EINSTELLWERKZEUG FÜR MOTORFAHRZEUGRÄDER MIT EINEM BINÄREN AKTUATOR ZUR EINSTELLUNG DER WINKELPOSITION DER FLÄCHE EINES RADES
MOTOR VEHICLE WHEEL SET-UP COMPRISING A BINARY ACTUATOR FOR ADJUSTING THE ANGULAR POSITION OF THE PLANE OF A WHEEL

(30) Priorité: 23.05.2007 FR 0703667
(43) Date de publication de la demande: 10.02.2010
(73) Titulaire: Société de Technologie Michelin, 63000 Clermont-Ferrand (FR); Michelin Recherche et Technique S.A., 1763 Granges-Paccot (CH)
(72) Inventeur: BLONDELET, Michel, F-63450 Le Crest (FR); NICOLAS, Serge, F-63100 Clermont-Ferrand (FR)
(74) Mandataire: Lasson, Cédric Y. M.
(86) Numéro de dépôt international: PCT/FR2008/000686
(87) Numéro de publication internationale: WO 2008/155486

(56) Documents cités:
- DE-A1- 10 045 956
- JP-A- 5 178 042
- US-A1- 2003 111 812
- US-B1- 6 293 561

## Description

L'invention concerne un montage de roue d'un véhicule automobile dans lequel au moins une roue est déplaçable par un actionneur binaire suivant deux positions angulaires, ainsi qu'un procédé de réglage de la position angulaire de roulage du plan d'une roue d'un tel montage.

L'invention s'applique notamment au montage des roues non directrices du véhicule automobile, en particulier à un montage des roues d'un essieu arrière.

On connaît des essieux arrière de véhicule automobile sur lesquels la position angulaire du plan de roue est asservie à des conditions de roulage par l'intermédiaire d'un actionneur. Ainsi, il est possible de régler en continu la position angulaire dudit plan de roue en fonction de la situation dynamique de roulage, de sorte notamment à améliorer la prise de virage du véhicule.

Toutefois, la mise en oeuvre de ces réalisations présente une complexité importante, notamment relativement aux performances de l'actionneur. En outre, s'agissant d'une fonction nécessaire au comportement dynamique du véhicule, les contraintes de sécurisation de son fonctionnement sont d'une rigueur importante.

Par ailleurs, pour améliorer le comportement dynamique du véhicule, il est connu de régler statiquement la position angulaire de roulage du plan de roue d'un essieu, notamment en montant ladite roue de sorte qu'elle présente un angle de pince et éventuellement un angle de carrossage non nuls.

L'angle de pince est défini comme étant l'angle séparant, dans un plan horizontal parallèle au sol, le plan de la roue du plan médian du véhicule. Lorsque l'avant de la roue se déplace vers l'intérieur, respectivement vers l'extérieur, on parle alors de pince, respectivement d'ouverture. L'angle de carrossage est l'angle du plan de la roue avec l'axe vertical, le carrossage étant positif si la roue penche vers l'extérieur du véhicule.

Un montage de roue d'un véhicule selon le préambule de la revendication 1 est connu du document DE 100 45956A. Toutefois, lors du roulage, le décalage angulaire entre le plan de roue et le châssis du véhicule induit une sollicitation plus importante du pneumatique ainsi qu'une surconsommation de carburant due à la résistance au roulement qui en résulte.

L'invention vise à proposer un montage de roue d'un véhicule automobile qui permet d'améliorer le rendement énergétique du roulage ainsi que la sécurité du comportement dynamique du véhicule, la conception dudit montage étant particulièrement simple tant du point de vue du cahier des charges de l'actionneur que relativement aux procédures de validation spécifique aux fonctions intervenant sur le comportement dynamique dudit véhicule.

A cet effet, selon un premier aspect, l'invention propose un montage de roue d'un véhicule automobile selon la revendication 1.

Selon un deuxième aspect, l'invention propose un procédé de réglage de la position angulaire de roulage du plan d'une roue d'un tel montage, ledit procédé prévoyant de maintenir le plan de la roue en deuxième position angulaire lors du roulage de ladite roue et, en cas de détection d'au moins un paramètre de roulage critique, d'activer le dispositif de commande de sorte à déplacer le plan de roue dans la première position angulaire pendant un laps de temps prédéterminé avant le retour dudit plan de la roue en deuxième position angulaire.

D'autres objets et avantages de l'invention apparaîtront dans la description qui suit, faite en référence aux figures annexées dans lesquelles :

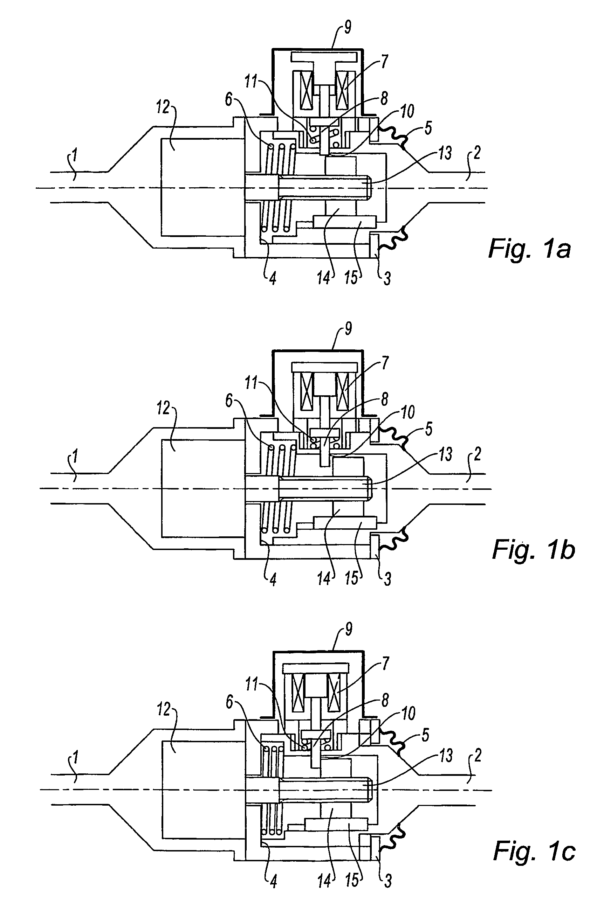

- les figures 1 sont des représentations schématiques partielles et en coupe montrant un bras de suspension d'un montage de roue dans lequel un actionneur binaire selon un premier mode de réalisation est implanté, respectivement dans un premier état stable (figure 1a), dans une position de reprise (figure 1b) et dans un deuxième état stable (figure 1c) ;

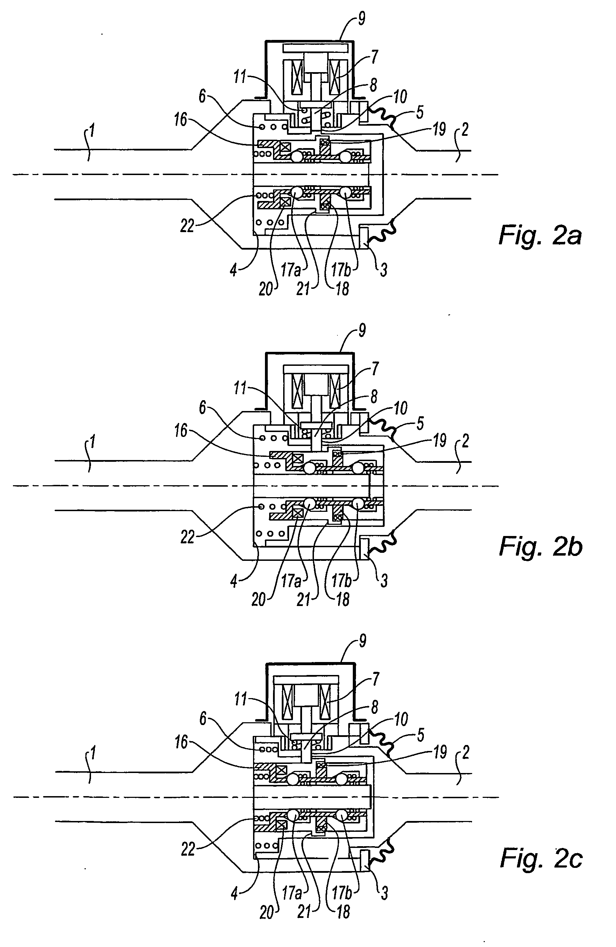

- les figures 2 sont des représentations schématiques partielles et en coupe montrant un bras de suspension d'un montage de roue dans lequel un actionneur binaire selon un deuxième mode de réalisation est implanté, respectivement dans un premier état stable (figure 2a), dans une position de reprise (figure 2b) et dans un deuxième état stable (figure 2c).

L'invention concerne un montage de roue d'un véhicule par l'intermédiaire d'un porte roue. En particulier, le montage est réalisé sur l'essieu portant les roues non directrices du véhicule, notamment l'invention s'applique à un essieu arrière. Selon une réalisation, l'essieu peut être du type comprenant une traverse sur chacune des extrémités de laquelle une roue est montée suivant l'invention. Selon une autre réalisation, l'essieu peut être de type multi-bras.

Au moins un, et notamment chaque, porte roue est associé au véhicule par l'intermédiaire d'au moins un pivot de sorte que le plan de la roue puisse présenter une première et une deuxième position angulaire de roulage. Le porte roue peut être solidaire de la caisse du véhicule ou d'un sous-châssis pour faciliter l'assemblage du véhicule et mieux filtrer les vibrations.

Dans un exemple de réalisation, les positions angulaires de roulage sont choisies parmi l'angle de pince, l'angle de carrossage ou une combinaison de ces deux angles. En particulier, la deuxième position angulaire peut correspondre à un angle de pince et/ou à un angle de carrossage sensiblement nul, la première position angulaire correspondant à un angle de pince et/ou à un angle de carrossage non nul.

Dans des exemples de réalisation, la deuxième position angulaire correspond à des angles de pince et de carrossage de 0°, la première position angulaire correspondant à un angle de pince inférieur à 0,5°, notamment de 0,35°, et à un angle de carrossage nul. En variante, l'angle de pince de la première position angulaire peut être de l'ordre de 1 °, ou moins.

Le montage comprend en outre, notamment pour chaque roue, un actionneur binaire présentant un organe fixe 1 et un organe mobile 2 en translation par rapport audit organe fixe. L'actionneur comprend un dispositif de commande binaire de l'organe mobile 2 dans deux états stables. Ainsi, l'actionneur binaire ne présente que deux états stables, le passage de l'un à l'autre se faisant sans possibilité de réglage dans la succession de positions intermédiaires. En particulier, un actionneur binaire se différencie donc d'un actionneur d'asservissement dans lequel le dispositif de commande applique des consignes pour fournir un réglage quasi-continu dans une pluralité de positions successives.

En prévoyant que l'organe mobile 2 soit solidaire du porte roue, chaque état stable de l'organe mobile 2 permet le déplacement du porte roue dans une position angulaire correspondant à une position angulaire du plan de roue. En outre, les états stables peuvent être réglables, notamment pour faire varier la plage angulaire comprise entre les deux positions angulaires du plan de roue.

En particulier, le premier état stable (figures 1a, 2a) correspond à la première position angulaire dans laquelle au moins l'angle de pince est non nul, le deuxième état stable (figures 1c, 2c) correspondant à la deuxième position angulaire dans laquelle au moins l'angle de pince est sensiblement nul.

En relation avec les figures, on décrit deux modes de réalisation d'un montage de roue dans lequel l'actionneur est implanté sur un bras de suspension d'un essieu multi-bras, chacun des organes 1, 2 formant une partie dudit bras. En variante, l'actionneur peut être implanté pour actionner un palonnier ou être encastré en bout de bras dans le porte roue.

L'organe fixe 1 comprend un logement dans lequel l'organe mobile 2 est monté coulissant entre deux butées axiales 3, 4 définissant la position de l'organe mobile 2 respectivement dans ses premier et deuxième états stables. En outre la zone de jonction entre les organes 1, 2 est étanchéifiée par un soufflet 5.

L'actionneur comprend un moyen de contrainte élastique 6 de la translation de l'organe mobile 2 depuis son deuxième vers son premier état stable, et un dispositif de blocage de ladite translation dans le deuxième état stable. Par ailleurs, l'actionneur comprend un dispositif moteur pour le retour de l'organe mobile 2 depuis son premier vers son deuxième état stable.

Ainsi, il est possible de bloquer l'organe mobile 2 dans son deuxième état stable et, par déblocage, de le disposer très rapidement dans son premier état stable sous l'effet du moyen de contrainte élastique 6. Ensuite, le dispositif moteur peut assurer le retour de l'organe mobile 2 dans son deuxième état stable dans l'attente d'un déblocage ultérieur.

Dans les modes de réalisation décrits, le dispositif de blocage comprend un électroaimant 7 qui est solidaire de l'organe mobile 2, la tige 8 dudit électroaimant étant déplaçable pour être engagée, respectivement dégagée, dans les organes 1, 2 pour bloquer, respectivement débloquée, la translation desdits organes. Plus précisément, l'électroaimant 7 est disposé sous un capot de protection 9, la tige 8 étant montée radialement en regard d'un alésage 10 d'engagement de l'extrémité de la tige 8 au travers dudit organe mobile. En outre, la tige 8 est montée, au moyen d'un ressort 11, en contrainte élastique par rapport à l'organe mobile 2, de sorte à dégager ladite tige en cas de désactivation dudit électroaimant. En variante, on peut prévoir un déblocage au moyen d'une gâchette montée en rotation, ladite rotation étant actionnée par la tige de l'électroaimant.

Cette réalisation permet, dès que la tige 8 débouche de l'alésage 10, de faire coller l'électroaimant 7 de sorte à pouvoir diminuer la tension électrique à ses bornes au strict minimum pour qu'il ne décolle pas. Ainsi, il est possible de maintenir l'organe mobile 2 dans son deuxième état avec une consommation électrique minimale.

Selon le mode de réalisation des figures 1, le dispositif moteur comprend, solidaire de l'organe fixe 1, un micro motoréducteur 12 déplaçant une vis 13 sur laquelle est monté un écrou 14. L'écrou 14 est arrêté en rotation par une clavette 15 solidaire de l'organe mobile 2 et ledit écrou formant butée d'engagement de la tige 8. En variante, la tige 8 peut former clavette d'arrêt en rotation de l'écrou 14.

Depuis le premier état stable (figure 1a), la reprise dudit organe mobile est assurée par rotation du motoréducteur 12 dans un sens d'éloignement de l'écrou 14 relativement à la tige 8 de sorte à permettre la mise en butée de cette dernière sur ledit écrou (figure 1b). Ensuite, par rotation du motoréducteur 12 dans l'autre sens, l'organe mobile 2 est ramené dans son deuxième état stable en provoquant la compression du moyen de contrainte élastique 6 (figure 1 c).

Selon le mode de réalisation des figures 2, le dispositif moteur comprend un chariot 16 portant un ensemble de deux butées coniques à billes 17a, 17b qui sont reliées entre elles par une structure 18 à déformation piézoélectrique et, en parallèle de celle-ci, un moyen ressort de traction 19. Le dispositif moteur comprend en outre un électroaimant 20 de déblocage des billes des butées 17a, 17b, la butée 17a comprenant une échancrure 21 d'engagement de l'extrémité de la tige 8.

Ainsi, le chariot 16 peut se déplacer vers l'organe fixe 1 sous l'effet des vibrations de la structure piézoélectrique 18. En se dilatant, la structure piézoélectrique 18 prend appui sur la deuxième butée conique 17b qui est coincée en position relativement à l'organe fixe 1 par l'intermédiaire de ses billes. La structure piézoélectrique 18 pousse alors la première butée conique 17a vers l'organe fixe 1, qui conserve son déplacement relativement audit organe fixe par l'intermédiaire de ses billes. Lorsque la structure piézoélectrique 18 se rétracte, le ressort de traction 19 rappelle la deuxième butée conique 17b qui conserve alors sa nouvelle position. En répétant plusieurs fois ce cycle, le chariot 16 se déplace progressivement de l'organe mobile 2 vers l'organe fixe 1.

Le fonctionnement d'un tel actionneur est alors le suivant. Depuis le premier état stable (figure 2a), on alimente les deux électroaimants 7, 20 pour que le chariot 16 retrouve en butée contre l'organe mobile 2 sous l'action d'un ressort 22. La tige 8 de l'électroaimant 7 est alors libre de sortir derrière l'échancrure 21 et l'électroaimant 7 colle (figure 2b). On coupe alors l'électroaimant 20 de déblocage des billes puis on fait vibrer la structure piézoélectrique 18 pour ramener le chariot 16 en entrainement l'organe mobile 2 par l'intermédiaire de la tige 8. Lorsque le chariot 16 arrive sur la butée 4 correspondant au deuxième état stable, on coupe l'alimentation de la structure piézoélectrique 18 et l'actionneur est prêt pour être déclenché (figure 2c).

Ces deux modes de réalisation permettent un retour lent et donc économe en énergie de l'organe mobile 2 dans son deuxième état. En outre, pendant la reprise, les actionneurs peuvent être commandés sans délai pour disposer l'organe mobile 2 vers le premier état.

Les montages de roue comprenant un actionneur tel que décrit ci-dessus sont particulièrement adaptés pour mettre en oeuvre un procédé de réglage de la position angulaire du plan d'une roue, ledit procédé prévoyant de maintenir le plan de la roue en deuxième position angulaire lors du roulage de ladite roue et, en cas de détection d'au moins un paramètre de roulage critique, d'activer le dispositif de commande de sorte à déplacer le plan de roue dans la première position angulaire pendant un laps de temps prédéterminé avant le retour dudit plan de la roue en deuxième position. En particulier, un tel procédé peut être mis en oeuvre sur chacune des roues d'un essieu.

Pour la mise en oeuvre du procédé, le dispositif de commande est connecté à un système de détermination d'au moins un paramètre de roulage En particulier, le système de détermination peut utiliser les capteurs existants dans le véhicule.

Ainsi, il est possible de maintenir le roulage avec un angle de pince sensiblement nul, ce qui est bénéfique du point de vue de l'usure du pneumatique et de la consommation induite. Et, en cas de roulage dans une situation nécessitant un angle de pince, de fournir rapidement cet angle et ce pendant un laps de temps prédéterminé de sorte à améliorer ponctuellement le comportement dynamique du véhicule. En outre, l'angle de pince n'est pas piloté en fonction de conditions de roulage du véhicule, ce qui facilite son implémentation notamment relativement aux contraintes de validation des fonctions de sécurité du véhicule.

En outre, en cas de défaillance, l'actionneur déplace le plan de roue dans la première position angulaire qui présente un angle de pince, ce qui correspond à une position de sécurité pour le comportement dynamique du véhicule.

Par ailleurs, l'actionneur peut être agencé pour que le temps de mise en position angulaire de sécurité soit de l'ordre du dixième de seconde, ce qui permet une sécurisation rapide du comportement dynamique. Et, le temps de retour en deuxième position peut être supérieur au temps de mise en position angulaire de sécurité, par exemple de l'ordre de la seconde voire de quelconque dizaines de secondes. Il est donc possible de mettre en oeuvre le procédé de réglage avec des actionneurs simples et à faible consommation d'énergie. En outre, la course de translation de l'organe mobile 2 étant faible, notamment de l'ordre du millimètre, les contraintes d'implantation de l'actionneur sont limitées.

Selon une réalisation, le laps de temps pendant lequel la position de sécurité est maintenue peut être inférieur à 10 secondes, notamment de l'ordre de 5 secondes. En effet, cette durée s'avère dans la majorité des cas suffisante pour stabiliser le comportement dynamique du véhicule.

Dans des exemples de réalisation, le paramètre de roulage critique peut correspondre au dépassement d'une valeur seuil pour un paramètre de roulage du véhicule, ledit paramètre pouvant être choisi parmi l'accélération latérale, la pression de freinage, la vitesse de rotation du volant.

Dans des exemples de réalisation, la valeur seuil d'accélération latérale est de 0,7 g, la valeur seuil de pression de freinage est de 38 bar et la valeur seuil de vitesse de rotation du volant est de 500°/sec. En outre, le paramètre de roulage critique peut être déterminé en fonction de la vitesse d'avancement du véhicule et/ou de l'intervention d'un système de sécurisation du comportement dynamique du véhicule, tel que l'ABS ou l'ESP.

## Revendications

1. Montage de roue d'un véhicule automobile par l'intermédiaire d'un porte roue, ledit porte roue étant associé audit véhicule par l'intermédiaire d'au moins un pivot de sorte que le plan de la roue puisse présenter une première et une deuxième position angulaire de roulage ledit montage étant **caractérisé en ce qu'**il comprend en outre un actionneur binaire présentant un organe fixe (1) et un organe mobile (2) en translation par rapport audit organe fixe, ledit organe mobile étant solidaire du porte roue et ledit actionneur comprenant un dispositif de commande binaire de l'organe mobile (2) dans deux états stables permettant chacun le déplacement du porte roue dans une position angulaire correspondant à une position angulaire du plan de roue, l'actionneur binaire ne présentant que deux états stables, le passage de l'un à l'autre se faisant sans possibilité de réglage dans la succession de positions intermediaires.

2. Montage de roue selon la revendication 1, **caractérisé en ce que** l'actionneur est implanté sur un bras de suspension, chacun des organes (1, 2) formant une partie dudit bras.

3. Montage de roue selon la revendication 1 ou 2, **caractérisé en ce que** les positions angulaires de roulage sont choisies parmi un angle de pince, un angle de carrossage ou une combinaison de ces deux angles.

4. Montage de roue selon l'une quelconque des revendications 1 à 3, **caractérisé en ce que** l'actionneur comprend :
- un moyen de contrainte élastique (6) de la translation de l'organe mobile (2) depuis son deuxième vers son premier état stable ;
- un dispositif de blocage de ladite translation dans le deuxième état stable, et une butée (3) définissant la position de l'organe mobile (2) dans le premier état stable ;
- un dispositif moteur pour le retour de l'organe mobile (2) depuis son premier vers son deuxième état stable.

5. Montage de roue selon la revendication 4, **caractérisé en ce que** le premier état stable correspond à une position angulaire dans laquelle au moins l'angle de pince est non nul, le deuxième état stable correspondant à une position angulaire dans laquelle au moins l'angle de pince est sensiblement nul.

6. Montage de roue selon la revendication 4 ou 5, **caractérisé en ce que** l'actionneur comprend en outre une butée (4) définissant la position de l'organe mobile (2) dans le deuxième état stable.

7. Montage de roue selon l'une quelconque des revendications 4 à 6, **caractérisé en ce que** le dispositif de blocage comprend un électroaimant (7) solidaire d'un des organes (2), la tige (8) dudit électroaimant étant déplaçable pour être engagée, respectivement dégagée, dans les organes (1, 2) pour bloquer, respectivement débloquer, la translation.

8. Montage de roue selon la revendication 7, **caractérisé en ce que** la tige (8) est montée en contrainte élastique par rapport à l'organe (2) portant l'électroaimant (7), de sorte à dégager ladite tige en cas de désactivation dudit électroaimant.

9. Montage de roue selon la revendication 7 ou 8, **caractérisé en ce que** le dispositif moteur comprend un motoréducteur (12) déplaçant une vis (13) sur laquelle est monté un écrou (14), ledit écrou étant arrêté en rotation par une clavette (15) et formant butée d'engagement de la tige (8).

10. Montage de roue selon la revendication 7 ou 8, **caractérisé en ce que** le dispositif moteur comprend un chariot (16) portant un ensemble de deux butées coniques à billes (17a, 17b) qui sont reliées entre elles par une structure à déformation piézoélectrique (18) et, en parallèle de celle-ci, un moyen ressort de traction (19), ledit dispositif comprenant en outre un électroaimant (20) de déblocage des billes des butées (17a, 17b), une butée (17a) comprenant une échancrure (21) d'engagement de la tige (8).

11. Procédé de réglage de la position angulaire de roulage du plan d'une roue d'un montage selon l'une quelconque des revendications 1 à 10, ledit procédé prévoyant de maintenir le plan de la roue en deuxième position angulaire lors du roulage de ladite roue et, en cas de détection d'au moins un paramètre de roulage critique, d'activer le dispositif de commande de sorte à déplacer le plan de roue dans la première position angulaire pendant un laps de temps prédéterminé avant le retour dudit plan de la roue en deuxième position angulaire.

12. Procédé de réglage selon la revendication 11, **caractérisé en ce que** le paramètre de roulage critique correspond au dépassement d'une valeur seuil pour un paramètre de roulage du véhicule, ledit paramètre étant choisi parmi l'accélération latérale, la pression de freinage, la vitesse de rotation du volant.

13. Procédé de réglage selon la revendication 11 ou 12, **caractérisé en ce que** le temps de retour du plan de roue en deuxième position angulaire est supérieur au temps de mise en première position angulaire.

## Claims

1. Motor vehicle wheel setup via a hub carrier, the said hub carrier being associated with the said vehicle via at least one pivot so that the plane of the wheel can adopt a first and a second angular running position, the said setup being **characterized in that** it further comprises a binary actuator having a fixed member (1) and a moving member (2) capable of translational movement with respect to the said fixed member, the said moving member being secured to the hub carrier and the said actuator comprising a binary control device for bringing the moving member (2) into two stable states each allowing the hub carrier to be moved into an angular position corresponding to an angular position of the plane of the wheel, the binary actuator having only two stable states, the switch from one to the other occurring without the possibility of setting into the succession of intermediate positions.

2. Wheel setup according to Claim 1, **characterized in that** the actuator is installed on a suspension arm, each of the members (1, 2) forming part of the said arm.

3. Wheel setup according to Claim 1 or 2, **characterized in that** the angular running positions are chosen from a toe-in angle, a camber angle or a combination of these two angles.

4. Wheel setup according to any one of Claims 1 to 3, **characterized in that** the actuator comprises:
- an elastic urging means (6) causing the translational movement of the moving member (2) from its second to its first stable state;
- a locking device for blocking the said translational movement in the second stable state, and an end stop (3) defining the position of the moving member (2) in the first stable state;
- a drive device for returning the moving member (2) from its first to its second stable state.

5. Wheel setup according to Claim 4, **characterized in that** the first stable state corresponds to an angular position in which at least the toe-in angle is non-zero, the second stable state corresponding to an angular position in which at least the toe-in angle is substantially zero.

6. Wheel setup according to Claim 4 or 5, **characterized in that** the actuator further comprises an end stop (4) defining the position of the moving member (2) in the second stable state.

7. Wheel setup according to any one of Claims 4 to 6, **characterized in that** the locking device comprises an electromagnet (7) secured to one of the members (2), the rod (8) of the said electromagnet being movable so that it can respectively be engaged in and disengaged from the members (1, 2) in order respectively to block and to unblock the translational movement.

8. Wheel setup according to Claim 7, **characterized in that** the rod (8) is mounted under elastic stress with respect to the member (2) bearing the electromagnet (7), so that the said rod is disengaged if the said electromagnet is deactivated.

9. Wheel setup according to Claim 7 or 8, **characterized in that** the drive device comprises a geared motor unit (12) driving a screw (13) on which a nut (14) is mounted, the said nut being prevented from rotating by a key (15) and forming an engagement end stop for the rod (8).

10. Wheel setup according to Claim 7 or 8, **characterized in that** the drive device comprises a carriage (16) bearing a set of two tapered thrust ball bearings (17a, 17b) which are connected to one another by a piezoelectric deformation structure (18) and, in parallel to that, a tension spring means (19), the said device further comprising an electromagnet (20) for unblocking the balls of the thrust bearings (17a, 17b), one thrust bearing (17a) comprising a notch (21) for engagement of the rod (8).

11. Method for adjusting the angular running position of the plane of a wheel of a setup according to any one of Claims 1 to 10, the said method planning to keep the plane of the wheel in the second angular position when the said wheel is running and, if at least one critical running parameter is detected, to activate the control device in such a way as to move the plane of the wheel into the first angular position for a predetermined length of time before returning the said plane of the wheel to the second angular position.

12. Method of adjustment according to Claim 11, **characterized in that** the critical running parameter corresponds to a running parameter of the vehicle exceeding a threshold value, the said parameter being chosen from the lateral acceleration, the braking pressure, and the rate of turn of the steering wheel.

13. Method of adjustment according to Claim 11 or 12, **characterized in that** the time taken to return the plane of the wheel to the second angular position is greater than the time taken to adopt the first angular position.

## Patentansprüche

1. Installation eines Rades eines Kraftfahrzeugs über einen Radträger, wobei der Radträger mit dem Fahrzeug über wenigstens einen Drehzapfen verbunden ist, derart, dass die Ebene des Rades eine erste und eine zweite Roll-Winkelposition einnehmen kann, wobei die Installation **dadurch gekennzeichnet ist, dass** sie außerdem einen binären Aktor umfasst, der ein festes Organ (1) und ein in Bezug auf das feste Organ translatorisch bewegliches Organ (2) aufweist, wobei das bewegliche Organ mit dem Radträger fest verbunden ist und der Aktor eine binäre Steuervorrichtung für das bewegliche Organ (2) in zwei stabilen Zuständen enthält, die jeweils die Verlagerung des Radträgers in eine Winkelposition, die einer Winkelposition der Radebene entspricht, ermöglichen, wobei der binäre Aktor nur zwei stabile Zustände aufweist, wobei der Übergang von einem in den anderen ohne Einstellmöglichkeit in der Abfolge der Zwischenpositionen erfolgt.

2. Radinstallation nach Anspruch 1, **dadurch gekennzeichnet, dass** der Aktor in einen Aufhängungslenker eingebaut ist, wobei jedes der Organe (1, 2) einen Teil des Lenkers bildet.

3. Radinstallation nach Anspruch 1 oder 2, **dadurch gekennzeichnet, dass** die Roll-Winkelpositionen unter einem Spurwinkel, einem Sturzwinkel oder einer Kombination aus diesen zwei Winkeln gewählt ist.

4. Radinstallation nach einem der Ansprüche 1 bis 3, **dadurch gekennzeichnet, dass** der Aktor umfasst:
- ein elastisches Begrenzungsmittel (6) für die translatorische Bewegung des beweglichen Organs (2) aus seinem zweiten in seinen ersten stabilen Zustand;
- eine Blockiervorrichtung für die translatorische Bewegung im zweiten stabilen Zustand und einen Anschlag (3), der die Position des beweglichen Organs (2) im ersten stabilen Zustand definiert;
- eine Motorvorrichtung für die Rückkehr des beweglichen Organs (2) aus seinem ersten in seinen zweiten stabilen Zustand.

5. Radinstallation nach Anspruch 4, **dadurch gekennzeichnet, dass** der erste stabile Zustand einer Winkelposition entspricht, in der wenigstens der Spurwinkel von null verschieden ist, und der zweite stabile Zustand einer Winkelposition entspricht, in der wenigstens der Spurwinkel im Wesentlichen null ist.

6. Radinstallation nach Anspruch 4 oder 5, **dadurch gekennzeichnet, dass** der Aktor außerdem einen Anschlag (4) aufweist, der die Position des beweglichen Organs (2) in dem zweiten stabilen Zustand definiert.

7. Radinstallation nach einem der Ansprüche 4 bis 6, **dadurch gekennzeichnet, dass** die Blockiervorrichtung einen Elektromagneten (7) umfasst, der mit einem der Organe (2) fest verbunden ist, wobei der Stift (8) des Elektromagneten verlagerbar ist, um in den Organen (1, 2) in Eingriff bzw. außer Eingriff zu gelangen, um die translatorische Bewegung zu blockieren bzw. freizugeben.

8. Radinstallation nach Anspruch 7, **dadurch gekennzeichnet, dass** der Stift (8) unter elastischer Beanspruchung in Bezug auf das den Elektromagneten (7) tragende Organ (2) montiert ist, derart, dass der Eingriff des Stifts im Fall eine Deaktivierung des Elektromagneten gelöst wird.

9. Radinstallation nach Anspruch 7 oder 8, **dadurch gekennzeichnet, dass** die Motorvorrichtung einen Getriebemotor (12) umfasst, der eine Schraube (13) verlagert, an der eine Mutter (14) montiert ist, wobei die Mutter durch einen Keil (15) rotatorisch arretiert ist und einen Eingriffanschlag des Stifts (8) bildet.

10. Radinstallation nach Anspruch 7 oder 8, **dadurch gekennzeichnet, dass** die Motorvorrichtung einen Schlitten (16) aufweist, der eine Anordnung aus zwei konischen Kugelanschlägen (17a, 17b) trägt, die miteinander über eine piezoelektrische Verformungsstruktur (18) verbunden sind, und parallel hierzu ein Zugfedermittel (19) trägt, wobei die Vorrichtung außerdem einen Elektromagneten (20) zum Entsperren der Kugeln der Anschläge (17a, 17b) enthält, wobei ein Anschlag (17a) eine Vertiefung (21) für den Eingriff des Stifts (8) aufweist.

11. Verfahren zum Einstellen der Roll-Winkelposition der Ebene eines Rades einer Installation nach einem der Ansprüche 1 bis 10, wobei das Verfahren vorsieht, die Ebene des Rades in der zweiten Winkelposition zu halten, wenn das Rad rollt, und bei Detektion wenigstens eines kritischen Rollparameters die Steuervorrichtung zu aktivieren, derart, dass die Radebene während des Verstreichens einer vorgegebenen Zeit in die erste Winkelposition verlagert wird, bevor die Ebene des Rades wieder in die zweite Winkelposition zurückkehrt.

12. Einstellverfahren nach Anspruch 11, **dadurch gekennzeichnet, dass** der kritische Rollparameter dem Überschreiten eines Schwellenwerts für einen Rollparameter des Fahrzeugs entspricht, wobei der Parameter gewählt ist aus der Querbeschleunigung, dem Bremsdruck und der Drehgeschwindigkeit des Lenkrades.

13. Einstellverfahren nach Anspruch 11 oder 12, **dadurch gekennzeichnet, dass** die Rückkehrzeit der Radebene in die zweite Winkelposition länger ist als die Zeit für die Einnahme der ersten Winkelposition.
